# EUROPÄISCHE PATENTSCHRIFT

(11) **EP 2 280 854 B1**
(45) Veröffentlichungstag und Bekanntmachung des Hinweises auf die Patenterteilung: **02.11.2011**
(21) Anmeldenummer: 09732563.3
(22) Anmeldetag: 09.04.2009
(51) Int. Cl.: B60T 8/17, B60T 13/66, B60T 17/22

(54) **STEUERVORRICHTUNG FÜR EIN SCHIENENFAHRZEUG**
CONTROL DEVICE FOR A RAIL VEHICLE
DISPOSITIF DE COMMANDE POUR UN VÉHICULE FERROVIAIRE

(30) Priorität: 14.04.2008 DE 102008018873
(43) Veröffentlichungstag der Anmeldung: 09.02.2011
(73) Patentinhaber: Bombardier Transportation GmbH, 10785 Berlin (DE)
(72) Erfinder: DÄMMIG, André, 68259 Mannheim (DE)
(74) Vertreter: Cohausz & Florack
(86) Internationale Anmeldenummer: PCT/EP2009/054311
(87) Internationale Veröffentlichungsnummer: WO 2009/127597

(56) Entgegenhaltungen:
- EP-B- 0 976 633
- WO-A-02/074599
- DE-U1- 20 319 547
- US-B1- 6 275 165
- MINDE F: "FAHRGASTNOTBREMSE UND NOTBREMSUEBERBRUECKUNG//PASSENGER ALARM AND EMERGENCY BRAKE OVERRIDE SYSTEM" ZEVRAIL - GLASERS ANNALEN, GEORG SIEMENS VERLAG, BERLIN, DE, Bd. 131, Nr. 11/12, 1. November 2007 (2007-11-01), Seiten 446-454, XP001508373 ISSN: 1618-8330

## Beschreibung

Die vorliegende Erfindung betrifft eine Steuervorrichtung für ein Fahrzeug, insbesondere ein Schienenfahrzeug, mit einer Traktionssteuerung zum Ansteuern von Traktionseinrichtungen des Fahrzeugs, einer Bremssteuerung zum Ansteuern von Bremseinrichtungen des Fahrzeugs und einer übergeordneten ersten Fahrzeugsteuerung zum Ansteuern der Traktionssteuerung und der Bremssteuerung über einen ersten Steuerpfad, insbesondere ein Datenbussystem, wobei die erste Fahrzeugsteuerung dazu ausgebildet ist, in einem Normalbetriebzustand der Steuervorrichtung die Traktionssteuerung und die Bremssteuerung derart anzusteuern, dass in einer erkannten Notfallsituation eine die Aktivierung der Bremseinrichtungen bewirkende Ansteuerung vorrangig vor einer die Aktivierung der Traktionseinrichtungen bewirkenden Ansteuerung erfolgt. Weiterhin betrifft die Erfindung ein entsprechendes Verfahren zum Steuern eines Fahrzeugs.

Über ein solches Fahrzeug ist ein hinlänglich bekanntes Sicherheitskonzept realisiert, bei dem das Fahrzeug in einer Gefahrensituation unmittelbar durch einen Bremseingriff (beispielsweise eine Notbremsung) zum Stillstand gebracht wird, um eine Gefährdung der Passagiere oder des Umfelds des Fahrzeugs zu reduzieren. In diesem Fall spricht man auch von dem Prinzip "Stop bei Gefahr". Der Bremseingriff erfolgt dabei unabhängig davon, ob ein Fahrbefehl bzw. eine Fahranforderung seitens des Fahrzeugführers vorliegt (mithin also unabhängig davon, ob der Fahrzeugführer einen Fahrhebel oder dergleichen ganz oder teilweise aus seiner neutralen Stellung ausgelenkt hat).

Dieses Sicherheitskonzept weist jedoch gewisse Nachteile auf, da in bestimmten Gefahrensituationen ein unmittelbarer Stillstand des Schienenfahrzeugs vermieden werden sollte. Kommt es beispielsweise in einem Tunnel zu einem Brand in einem Schienenfahrzeug, sollte das Schienenfahrzeug nach Möglichkeit erst in dem nächstgelegenen Bahnhof oder einer anderen Stelle mit einer geeigneten Fluchtmöglichkeit für die Passagiere zum Stillstand kommen, um eine zügige und effektive Evakuierung der Fahrgäste aus dem Gefahrenbereich zu ermöglichen.

Aus der DE 10 2005 007 336 A1 ist eine solche gattungsgemäße Steuervorrichtung für ein Schienenfahrzeug bekannt, bei der eine übergeordnete Fahrzeugsteuerung über ein Datenbussystem die Bremssteuerung der einzelnen Bremseinrichtungen ansteuert. Über einen mit der übergeordneten Fahrzeugsteuerung verbundenen Notschalter kann der Fahrzeugführer unter anderem alle bisherigen Bremsbefehle über das Datenbussystem außer Kraft setzen, mithin also auch eine aktuelle Notbremsung abbrechen und ein Weiterfahren des Fahrzeugs erzwingen.

Problematisch ist hierbei, dass lediglich einmalig die bisherigen Bremsbefehle über das Datenbussystem außer Kraft gesetzt werden, die möglichen Ursachen, die in dem Steuerungssystem eine Weiterfahrt verhindern, jedoch nicht beseitigt werden. Diese Ursachen können sowohl software- als auch hardwarebedingt sein. Beispielsweise können an der Fahrzeugsteuerung erwartete Signale fehlen oder über den Datenbus permanent fehlerhafte bzw. widersprüchliche Signale anliegen. Bei diesen Signalen kann es sich beispielsweise um den Zustand relevanter Komponenten des Fahrzeugs wiedergebende Signale (z. B. unterbrochene Grünschleife, eingelegte bzw. blockierende mechanische Bremse, geöffnete Türen, betätigte Notbremse, aktivierte Zwangsbremse, Ausfall der Fahrzeugsteuerung, Fehler bzw. Störung der Energieversorgung, defekter Sollwertgeber, Ausfall mehrerer Antriebe etc.) handeln, die permanent über den Datenbus zur Fahrzeugsteuerung gelangen und dort entsprechend verarbeitet werden müssen.

In allen oben beispielhaft genannten Fällen führen die an der Fahrzeugsteuerung einlaufenden Signale bei dem bekannten Fahrzeug im Normalbetrieb zu einer Notbremsung und müssen daher bei der bekannten Steuerung durch eine wiederholte oder dauerhafte Betätigung des Notschalters bewusst außer Kraft gesetzt werden. Dabei ist es bei dem bekannten Fahrzeug insbesondere vorgesehen, dass die Außerkraftsetzung der Bremsbefehle (durch eine entsprechende UND-Verknüpfung mehrerer Signale) nur durch eine aufwändige, bewusste, zwangsläufig mehrfach zu wiederholende Aktion des Fahrzeugführers erfolgen kann. Dies kann gerade in einer Stresssituation (z. B. Fahrzeugbrand in einem Tunnel) zu einer Überforderung des Fahrzeugführers führen.

Der vorliegenden Erfindung liegt daher die Aufgabe zu Grunde, eine Steuervorrichtung bzw. ein Verfahren zur Steuerung eines Fahrzeugs zur Verfügung zu stellen, welche bzw. welches die oben genannten Nachteile nicht oder zumindest in geringerem Maße aufweist und insbesondere auf einfache und zuverlässige Weise eine Verhinderung oder Unterbrechung einer automatischen Notbremsung ermöglicht, um die Weiterfahrt aus einer Gefahrenstelle heraus zu ermöglichen.

Die vorliegende Erfindung löst diese Aufgabe ausgehend von einer Steuervorrichtung gemäß dem Oberbegriff des Anspruchs 1 durch die im kennzeichnenden Teil des Anspruchs 1 angegebenen Merkmale. Sie löst diese Aufgabe weiterhin ausgehend von einem Verfahren gemäß dem Oberbegriff des Anspruchs 24 durch die im kennzeichnenden Teil des Anspruchs 24 angegebenen Merkmale.

Der vorliegenden Erfindung liegt dabei die technische Lehre zu Grunde, dass man auf einfache und zuverlässige Weise eine Verhinderung oder Unterbrechung einer automatischen Notbremsung und damit eine Weiterfahrt aus einer Gefahrenstelle heraus ermöglicht, wenn man die erste übergeordnete Fahrzeugsteuerung in einem Sonderbetrieb abschaltet und neben der ersten Fahrzeugsteuerung eine zweite, in dem Sonderbetrieb aktivierte Fahrzeugsteuerung vorsieht, welche zum einen die Bremseinrichtungen sowie die Traktionseinrichtungen über einen separaten Steuerpfad ansteuert und zum anderen derart ausgebildet ist, dass sie einen Fahrbefehl vorrangig gegenüber einem Bremsbefehl ausführt.

Mit anderen Worten wird mit der erfindungsgemäßen Steuervorrichtung ein Weiterfahren ermöglicht , indem in dem Sonderbetriebszustand die Prioritäten zwischen den Steuerungsbefehlen "Fahren" und "Bremsen" gegenüber dem Normalbetriebszustand vertauscht werden. In diesem Fall wird bei einem anliegenden Bremsbefehl und einem anliegenden Fahrbefehl, der Bremsbefehl ignoriert und lediglich der Fahrbefehl ausgeführt, sodass ein Weiterfahren des Fahrzeugs möglich ist.

Diese Gestaltung hat zum einen den Vorteil, dass durch die Abschaltung der ersten Fahrzeugsteuerung und letztlich des ersten Steuerpfades sämtliche Signale bzw. Störungen im System, welche ursächlich für eine Notbremsung sein können, schnell und einfach ausgeblendet werden können, sodass sie keinen Einfluss mehr auf die Steuerung im Sonderbetrieb haben. Da sie nur für den Sonderbetrieb vorgesehen sein müssen (in dem gegebenenfalls auch eine Beschädigung einzelner Komponenten des Fahrzeugs in Kauf genommen wird, solange das Erreichen eines sicheren Haltepunktes gewährleistet werden kann) können die zweite Fahrzeugsteuerung sowie die Komponenten des zweiten Steuerpfades entsprechend einfach und robust bzw. wenig störanfällig aufgebaut sein, sodass ihre zuverlässige Funktion in einfacher Weise sichergestellt ist. Schließlich kann bei einer solchen einfachen Gestaltung auch in einfacher Weise der Vorrang der Fahrbefehle vor eventuellen Bremsbefehlen realisiert werden.

Gemäß einem Aspekt betrifft die vorliegende Erfindung daher eine Steuervorrichtung für ein Fahrzeug, insbesondere ein Schienenfahrzeug, mit einer Traktionssteuerung zum Ansteuern von Traktionseinrichtungen des Fahrzeugs, einer Bremssteuerung zum Ansteuern von Bremseinrichtungen des Fahrzeugs und einer übergeordneten ersten Fahrzeugsteuerung zum Ansteuern der Traktionssteuerung und der Bremssteuerung über einen ersten Steuerpfad, insbesondere ein Datenbussystem. Die erste Fahrzeugsteuerung ist dazu ausgebildet, in einem Normalbetriebzustand der Steuervorrichtung die Traktionssteuerung und die Bremssteuerung derart anzusteuern, dass in einer erkannten Notfallsituation eine die Aktivierung der Bremseinrichtungen bewirkende Ansteuerung vorrangig vor einer die Aktivierung der Traktionseinrichtungen bewirkenden Ansteuerung erfolgt. Weiterhin ist eine zweite Fahrzeugsteuerung zum Ansteuern der Traktionssteuerung und der Bremssteuerung über einen zweiten Steuerpfad vorgesehen, wobei der zweite Steuerpfad von dem ersten Steuerpfad verschieden ist. Die Steuereinrichtung ist dazu ausgebildet, in einem Sonderbetriebszustand die erste Fahrzeugsteuerung zu deaktivieren und die zweite Fahrzeugsteuerung zu aktivieren. Die zweite Fahrzeugsteuerung ist wiederum dazu ausgebildet, in dem Sonderbetriebzustand die Traktionssteuerung und die Bremssteuerung derart anzusteuern, dass eine die Aktivierung der Traktionseinrichtungen bewirkende Ansteuerung vorrangig vor einer die Aktivierung der Bremseinrichtungen bewirkenden Ansteuerung erfolgt.

Der beschriebene Vorrang von Fahrbefehlen gegenüber Bremsbefehlen in dem Sonderbetriebszustand kann grundsätzlich in beliebiger geeigneter Weise realisiert sein, solange sichergestellt ist, dass in diesem Sonderbetriebszustand keine Aktivierung der Bremsen erfolgt bzw. ein Lösen der Bremsen erfolgt, solange ein gültiger Fahrbefehl anliegt. Vorzugsweise ist vorgesehen, dass ein Fahrbefehlssignal an die Traktionssteuerung eine Betätigung von Traktionseinrichtungen des Fahrzeugs auslöst sowie ein Lösebefehlssignal an die Bremssteuerung eine Lösen von Bremseinrichtungen des Fahrzeugs auslöst. Die zweite Fahrzeugsteuerung ist in diesem Fall derart ausgebildet, dass sie bei einer eingehenden Fahranforderung in dem Sonderbetriebzustand ein Fahrbefehlsignal an die Traktionssteuerung und ein Lösesignal an die Bremssteuerung absetzt. Hiermit kann auf besonders einfache Weise eine Weiterfahrt bis zur nächsten sicheren Halteposition gewährleistet werden.

Zu den Komponenten des Fahrzeugs, die in einer Gefahrensituation oder bei einer Störung in dem Normalbetrieb des Fahrzeugs die Notbremsung auslösen können, können unter anderem die Komponenten der Energieversorgungseinrichtungen für die Traktionseinrichtungen des Fahrzeugs zählen. Im Fall einer Störung in diesem Bereich (beispielsweise einer Überhitzung oder einem Brand) kann es dazu kommen, dass eine oder mehrere der vorhandenen Energieversorgungseinrichtungen abgeschaltet werden. Die Traktionseinrichtungen werden in diesem Fall nicht mehr mit (ausreichend) Energie versorgt, um die zum Weiterfahren erforderliche Traktionsleistung zur Verfügung zu stellen.

Bei vorteilhaften Varianten der Erfindung ist daher eine (in der Regel im Fahrzeug angeordnete) Energieversorgungseinrichtung zur Versorgung wenigstens eines Teils der Traktionseinrichtungen des Fahrzeugs vorgesehen und die zweite Fahrzeugsteuerung ist derart ausgebildet, dass sie in dem Sonderbetriebzustand zumindest bei einer eingehenden Fahranforderung ein Aktivierungssignal zur Aktivierung der Energieversorgungseinrichtung generiert. Mit anderen Worten wird in diesem Fall in dem Sonderbetriebszustand sichergestellt, dass eine oder gegebenenfalls mehrere (vorzugsweise alle) Energieversorgungseinrichtungen des Fahrzeugs aktiviert werden, um die zum Weiterfahren erforderliche Traktionsleistung (mit ausreichender Sicherheit) zur Verfügung zu stellen. Hierbei wird in Kauf genommen, dass die betreffende Energieversorgungseinrichtung dabei gegebenenfalls beschädigt wird, um die Gefährdung der Passagiere zu beseitigen.

Die Aktivierung des Sonderbetriebszustands kann auf beliebige geeignete Weise erfolgen. Insbesondere kann vorgesehen sein, dass eine automatische Aktivierung des Sonderbetriebszustands erfolgt, wenn beispielsweise über eine entsprechende Erfassung der Position des Fahrzeugs und/oder der Umgebung des Fahrzeugs festgestellt wird, dass am aktuellen Standort des Fahrzeugs keine sichere Evakuierung des Fahrzeugs möglich ist. Bei anderen bevorzugten Varianten der erfindungsgemäßen Steuervorrichtung ist vorgesehen, dass der Sonderbetriebszustand manuell aktivierbar ist, um dem in der Regel umfassend geschulten und erfahrenen Fahrzeugführer die Entscheidung hierüber zu ermöglichen.

Der erste Steuerpfad und der zweite Steuerpfad können grundsätzlich in beliebiger geeigneter Weise gestaltet sein. Bei bevorzugten Varianten der erfindungsgemäßen Steuervorrichtung umfasst der erste Steuerpfad ein Datenbussystem, der hiermit im Normalbetriebszustand eine besonders vorteilhafte Ansteuerung der Traktionseinrichtungen, der Bremseinrichtungen sowie gegebenenfalls weiterer Einrichtungen des Fahrzeugs möglich ist.

Zusätzlich oder alternativ ist bevorzugt vorgesehen, dass der zweite Steuerpfad eine direkte Signalleitung zwischen der zweiten Fahrzeugsteuerung und wenigstens einer in dem Sonderbetriebszustand anzusteuernden Komponente der Traktionseinrichtungen oder der Bremseinrichtungen umfasst. Durch diese direkte Verschaltung zwischen der zweiten Fahrzeugsteuerung und der betreffenden anzusteuern Komponente ist eine besonders robuste, wenig störanfällige Verbindung sichergestellt, die in dem Sonderbetriebszustand eine zuverlässige Ansteuerung der betreffenden Komponente gewährleistet.

Die direkte Verschaltung kann nur zu einzelnen Komponenten der Traktionseinrichtungen und/oder der Bremseinrichtungen bestehen. Vorzugsweise ist jedoch vorgesehen, dass der zweite Steuerpfad jeweils eine fest verschaltete Signalleitung zwischen der zweiten Fahrzeugsteuerung und allen in dem Sonderbetriebszustand anzusteuernden Komponenten der Traktionseinrichtungen und der Bremseinrichtungen umfasst. Hierdurch ist auch im Falle eines Ausfalls einzelner Komponenten der Traktionseinrichtungen oder der Bremseinrichtungen eine zuverlässige Ansteuerung der übrigen, (zumindest ausreichend) funktionsfähigen Komponenten der Traktionseinrichtungen und der Bremseinrichtungen sichergestellt.

Die Signale der zweiten Fahrzeugsteuerung können über eine einzige Signalleitung des zweiten Steuerpfades zu der Traktionseinrichtung bzw. den Traktionseinrichtungen des Fahrzeugs übermittelt werden. Vorzugsweise ist jedoch bei einer Variante mit einer Mehrzahl von separaten Traktionseinrichtungen vorgesehen, dass der zweite Steuerpfad eine erste Signalleitung und eine zweite Signalleitung umfasst, wobei die erste Signalleitung mit einem ersten Teil der Traktionseinrichtungen verbunden ist und die zweite Signalleitung mit einem zweiten Teil der Traktionseinrichtungen verbunden ist. Durch diese mehrsträngige Schaltung kann auch im Fall einer Störung im Bereich einer der beiden Signalleitungen sichergesteltt werden, dass noch eine ausreichende Anzahl von Traktionseinrichtungen zuverlässig angesteuert werden kann.

Es versteht sich in diesem Zusammenhang, dass bei anderen Varianten der Erfindung natürlich auch mehr als zwei Signalleitungen zu mehr als zwei Teilen der Traktionseinrichtungen geführt sein können. Ebenso versteht es sich natürlich, dass bei anderen Varianten der Erfindung eine redundante Anordnung der Signalleitungen vorgesehen sein kann, mithin also für wenigstens eine der Traktionseinrichtungen wenigstens zwei parallele Signalleitungen vorgesehen sind.

Die Aufteilung der Traktionseinrichtungen auf die Signalleitungen kann grundsätzlich in beliebiger geeigneter Weise erfolgen. Vorzugsweise umfasst der erste Teil der Traktionseinrichtungen wenigstens 50% der Traktionseinrichtungen des Fahrzeugs. Weiter vorzugsweise ist vorgesehen, dass der erste Teil der Traktionseinrichtungen und/oder der zweite Teil der Traktionseinrichtungen einen Anteil der Traktionseinrichtungen umfasst, dessen summierte Traktionsleistung ausreicht, um das Fahrzeug bei einem Ausfall des anderen Teils der Traktionseinrichtungen weiterhin zu bewegen. Hiermit ist sichergestellt, dass das Fahrzeug auch beim Ausfall des anderen Teils der Traktionseinrichtungen immer noch zu einem sicheren Halteplatz bewegt werden kann.

Bei weiteren vorteilhaften Varianten der Erfindung ist vorgesehen, dass der erste Teil der Traktionseinrichtungen und/oder der zweite Teil der Traktionseinrichtungen einen Anteil der Traktionseinrichtungen umfasst, dessen summierte Traktionsleistung ausreicht, um das Fahrzeug bei Blockieren zumindest eines Teils der Bremseinrichtungen, insbesondere aller Bremseinrichtungen, des Fahrzeugs weiterhin zu bewegen.

Die beiden Signalleitungen können grundsätzlich in beliebiger geeigneter Weise in dem Fahrzeug angeordnet sein. Um das Risiko einer gleichzeitigen Störung beider Signalleitungen zu reduzieren, ist vorzugsweise vorgesehen, dass die erste Signalleitung und die zweite Signalleitung räumlich getrennt und/oder signaltechnisch getrennt voneinander angeordnet sind. Hinsichtlich der räumlichen Trennung kann beispielsweise vorgesehen sein, dass die erste Signalleitung auf der einen Fahrzeugseite und die zweite Signalleitung auf der anderen Fahrzeugseite angeordnet ist. Hierdurch wird die Wahrscheinlichkeit erhöht, dass bei einer Beschädigung einer der Signalleitungen weiterhin Steuerungsbefehle bzw. Steuersignale über die andere Signalleitung übertragen werden können.

Hinsichtlich der Ansteuerung der Bremseinrichtungen kann in dem Sonderbetrieb analog zu der Ansteuerung der Traktionseinrichtungen vorgegangen werden. Die Signale der zweiten Fahrzeugsteuerung können demgemäß über eine einzige Signalleitung des zweiten Steuerpfades zu der Bremseinrichtung bzw. den Bremseinrichtungen des Fahrzeugs übermittelt werden. Vorzugsweise ist jedoch bei einer Variante mit einer Mehrzahl von separaten Bremseinrichtungen wiederum vorgesehen, dass der zweite Steuerpfad eine dritte Signalleitung und eine vierte Signalleitung umfasst, wobei die dritte Signalleitung mit einem ersten Teil der Bremseinrichtungen verbunden ist und die vierte Signalleitung mit einem zweiten Teil der Bremseinrichtungen verbunden ist.

Die Aufteilung der Bremseinrichtungen auf die Signalleitungen kann wiederum grundsätzlich in beliebiger geeigneter Weise erfolgen. Vorzugsweise ist wiederum vorgesehen, dass der erste Teil der Bremseinrichtungen wenigstens 50% der Bremseinrichtungen des Fahrzeugs umfasst. Auch hier ist es aus den oben genannten Gründen von Vorteil, dass die erste Signalleitung und die zweite Signalleitung räumlich getrennt und/oder signaltechnisch getrennt voneinander angeordnet sind. Ebenso kann auch hier wieder eine Anordnung mit mehr als zwei Kreisen und/oder eine redundante Anordnung der Signalleitungen vorgesehen sein.

Auch hinsichtlich der Ansteuerung der Energieversorgungseinrichtungen des Fahrzeugs kann in dem Sonderbetrieb analog zu der Ansteuerung der Traktionseinrichtungen vorgegangen werden. Die Signale der zweiten Fahrzeugsteuerung können demgemäß über eine einzige Signalleitung des zweiten Steuerpfades zu der Energieversorgungseinrichtung bzw. den Energieversorgungseinrichtungen des Fahrzeugs übermittelt werden. Vorzugsweise ist jedoch bei einer Variante mit einer Mehrzahl von separaten Energieversorgungseinrichtungen wiederum vorgesehen, dass der zweite Steuerpfad eine fünfte Signalleitung und eine sechste Signalleitung umfasst, wobei die fünfte Signalleitung mit einem ersten Teil der Energieversorgungseinrichtungen verbunden ist und die sechste Signalleitung mit einem zweiten Teil der Energieversorgungseinrichtungen verbunden ist.

Auch die Aufteilung der Energieversorgungseinrichtungen auf die Signalleitungen kann wiederum grundsätzlich in beliebiger geeigneter Weise erfolgen. Vorzugsweise ist wiederum vorgesehen, dass der erste Teil der Energieversorgungseinrichtungen wenigstens 50% der Energieversorgungseinrichtungen des Fahrzeugs umfasst. Auch hier ist es aus den oben genannten Gründen von Vorteil, dass die fünfte Signalleitung und die sechste Signalleitung räumlich getrennt und/oder signaltechnisch getrennt voneinander angeordnet sind.

Bei bevorzugten Varianten der Erfindung ist eine so genannte "Totmannfunktion" vorgesehen. Hierzu ist die zweite Fahrzeugsteuerung derart ausgebildet, dass in dem Sonderbetriebszustand eine Fahranforderung nach einer ersten Zeitspanne seit Eintreffen der Fahranforderung bei fehlender Erneuerung der Fahranforderung wieder aufgehoben wird. Bei Aufhebung der Fahranforderung können dann einfach die Traktionseinrichtungen abgeschaltet werden. Um das Aufheben der Fahranforderung zu verhindern, kann der Fahrzeugführer also beispielsweise den die Fahranforderung generierenden Fahrhebel nicht ständig in einer ausgelenkten Position halten, sondern muss diesen von Zeit zu Zeit in seine neutrale Stellung zurück bewegen und dann erneut auslenken, um die Fahranforderung zu erneuern und damit die Fahrt fortzusetzen.

Bei weiteren bevorzugten Varianten ist die zweite Fahrzeugsteuerung weiterhin derart ausgebildet, dass in dem Sonderbetriebszustand nach einer zweiten Zeitspanne seit Eintreffen einer Fahranforderung bei fehlender Erneuerung der Fahranforderung eine Aktivierung der Bremseinrichtungen erfolgt. Um das Aktivieren der Bremseinrichtungen zu verhindern, kann der Fahrzeugführer also beispielsweise den die Fahranforderung generierenden Fahrhebel nicht ständig in einer ausgelenkten Position halten, sondern muss diesen von Zeit zu Zeit in seine neutrale Stellung zurück bewegen und dann erneut auslenken, um die Fahranforderung zu erneuern und damit die Fahrt ohne Bremseingriff fortzusetzen. Hierdurch kann sichergestellt werden, dass nach einer bestimmten Zeit ohne Erneuerung der Fahranforderung eine Notbremsung durchgeführt wird, um das Fahrzeug bei einem Ausfall des Fahrzeugführers automatisch zum Stillstand zu bringen.

Die Aktivierung der Bremseinrichtungen kann vor Aufhebung der Fahranforderung (mit der beispielsweise daraus resultierenden Abschaltung der Traktionseinrichtungen) erfolgen. Vorzugsweise ist jedoch vorgesehen, dass die zweite Zeitspanne länger als die erste Zeitspanne ist, sodass zuerst der Fahrbefehl aufgehoben wird, bevor der Bremseingriff erfolgt.

Bei bevorzugten Varianten der erfindungsgemäßen Steuervorrichtung kann die "Totmannfunktion" (also die Überwachung der Handlungsfähigkeit des Fahrzeugführers) über einen Zeitzähler realisiert sein, der in dem Sonderbetriebszustand nach einer ersten Zeitspanne den Fahrbefehl aufhebt. Ein solcher Zeitzähler kann sowohl durch eine Softwarelösung wie auch durch eine Hardwarelösung realisiert sein. Der Zeitzähler kann dazu ausgelegt sein, nach einer bestimmten, vorher festgelegten Zeitspanne, beispielsweise nach 30 Sekunden, einen Fahrbefehl aufzuheben. Das Fahrzeug kann sich anschließend in einem Rollzustand befinden.

Für den Fall, dass der Fahrzeugführer handlungsfähig ist, kann er durch eine bewusste Schalthandlung den Fahrbefehl erneuern und so den Zeitzähler zurücksetzen. Eine solche Schalthandlung kann beispielsweise dadurch realisiert sein, dass der Fahrhebel für eine bestimmte Zeitspanne (beispielsweise 0,5 s) in seine neutrale Stellung (Nullposition) gesetzt wird und anschließend neu ausgelenkt wird. Es versteht sich jedoch, dass bei anderen Varianten der vorliegenden Erfindung jedoch auch andere Schalthandlungen oder dergleichen vorgesehen sein können.

Bei weiteren Varianten mit dem oben beschriebenen automatischen Bremseingriff kann ein Zeitrelais vorgesehen sein, das in dem zweiten Betriebszustand wie beschrieben die Funktion "Bremsen" nach einer zweiten Zeitspanne automatisch aktiviert.

Hierbei kann die zweite Zeitspanne derart gesetzt werden, dass diese deutlich länger als die erste Zeitspanne ist. Beispielsweise kann die erste Zeitspanne 30 s und die zweite Zeitspanne 45 s betragen. Jedoch versteht es sich, dass andere Zeitspannen gewählt und an die speziellen Erfordernisse des Fahrzeugs und der Umgebung angepasst werden können.

Bei bevorzugten Varianten der erfindungsgemäßen Steuervorrichtung umfasst die zweite Fahrzeugsteuerung zumindest ein Betätigungselement, das dazu ausgebildet ist, in dem Sonderbetriebszustand Steuerungsbefehle für die die Traktionssteuerung und/oder die Bremssteuerung zu erzeugen. Vorzugsweise handelt es sich hierbei um den Fahrhebel, den der Fahrzeugführer auch im Normalbetriebszustand nutzt.

Bei weiteren bevorzugten Varianten der erfindungsgemäßen Steuervorrichtung umfasst die zweite Fahrzeugsteuerung ein Türbetätigungselement, das dazu ausgebildet ist, in dem Sonderbetriebszustand Steuerungsbefehle für zumindest eine Türsteuerungseinheit zu erzeugen. Dieses Türbetätigungselement kann wiederum analog zu der oben für die Traktionseinrichtungen etc. beschriebenen Weise über eine oder mehrere separate Signalleitungen mit einer oder mehreren Türsteuerungseinheiten verbunden sein.

Die vorliegende Erfindung betrifft weiterhin ein Fahrzeug, insbesondere ein Schienenfahrzeug, mit einer erfindungsgemäßen Steuervorrichtung. Mit diesem Fahrzeug lassen sich die oben beschriebenen Varianten und Vorteile in demselben Maße realisieren, sodass die lediglich auf die obigen Ausführungen Bezug genommen wird.

Die vorliegende Erfindung betrifft schließlich ein Verfahren zur Steuerung eines Fahrzeugs, insbesondere eines Schienenfahrzeugs, bei dem über eine Traktionssteuerung Traktionseinrichtungen des Fahrzeugs angesteuert werden, über eine Bremssteuerung Bremseinrichtungen des Fahrzeugs angesteuert werden und über eine übergeordnete erste Fahrzeugsteuerung die Traktionssteuerung und die Bremssteuerung über einen ersten Steuerpfad, insbesondere ein Datenbussystem, angesteuert werden, wobei die erste Fahrzeugsteuerung in einem Normalbetriebzustand die Traktionssteuerung und die Bremssteuerung derart ansteuert, dass in einer erkannten Notfallsituation eine die Aktivierung der Bremseinrichtungen bewirkende Ansteuerung vorrangig vor einer die Aktivierung der Traktionseinrichtungen bewirkenden Ansteuerung erfolgt. In einem Sonderbetriebszustand wird die erste Fahrzeugsteuerung deaktiviert und eine zweite Fahrzeugsteuerung aktiviert, wobei die zweite Fahrzeugsteuerung die Traktionssteuerung und die Bremssteuerung über einen zweiten Steuerpfad ansteuert, der von dem ersten Steuerpfad verschieden ist, und die zweite Fahrzeugsteuerung in dem Sonderbetriebzustand die Traktionssteuerung und die Bremssteuerung derart ansteuert, dass eine die Aktivierung der Traktionseinrichtungen bewirkende Ansteuerung vorrangig vor einer die Aktivierung der Bremseinrichtungen bewirkenden Ansteuerung erfolgt. Mit diesem Verfahren lassen sich die oben im Zusammenhang mit der erfindungsgemäßen Steuervorrichtung beschriebenen Varianten und Vorteile in demselben Maße realisieren, sodass die lediglich auf die obigen Ausführungen Bezug genommen wird.

Bei weiteren bevorzugten Ausführungen der Erfindung kann über eine geeignete Detektoreinrichtung zumindest ein Fehler des Schienenfahrzeugs erfasst werden. Vorteilhafterweise können Fehler detektiert werden, die in dem Normalbetriebszustand ein nicht mehr fahrfähiges Schienenfahrzeug zur Folge haben können. Beispiele für solche Fehler sind die bereits eingangs genannten Fehler, also beispielsweise fehlende oder widersprüchliche Signale, unterbrochene Grünschleife, blockierende Bremsen, geöffnete Türen, Fahremotbremsung, anstehenden Zwangsbremsung, Ausfall der Fahrzeugsteuerung, Fehler in der Spannungsversorgung oder ein defekter Sollwertgeber. Auch ein Brand kann eine Ursache sein, da ein Brandmelder die Spannungsversorgung deaktivieren kann. Bei Fehlern, die einen Fahrbetrieb weiterhin erlauben, kann der Fahrbetrieb auch in dem Normalbetriebszustand aufrechterhalten werden. Eine Detektoreinrichtung kann geeignete Sensor- und Auswerteinheiten umfassen, um die jeweilige Störung erfassen und klassifizieren zu können.

Vorzugsweise kann der Fehler dem Fahrzeugführer über geeignete Einrichtungen signalisiert werden. Insbesondere kann ein Fehler, der zur Fahrunfähigkeit des Fahrzeugs führt, angezeigt werden. Es können sowohl optische als auch akustische Anzeigemittel eingesetzt werden. Der Fahrzeugführer kann dann unmittelbar und angemessen auf den jeweiligen Fehler reagieren und falls erforderlich den Sonderbetriebszustand aktivieren.

Bei bevorzugten Varianten der Erfindung kann die Höchstgeschwindigkeit des Schienenfahrzeugs im Sonderbetriebszustand auf einen vorgebbaren Wert (beispielsweise 50 km/h) begrenzt werden. Ferner kann im Sonderbetriebszustand beispielsweise ein Signal zur Absenkung eines Stromabnehmers gesperrt werden, sodass die Spannungsversorgung weiterhin gewährleistet ist.

Weitere bevorzugte Ausgestaltungen der Erfindung ergeben sich aus den Unteransprüchen bzw. der nachstehenden Beschreibung bevorzugter Ausführungsbeispiele, welche auf die beigefügten Zeichnungen Bezug nimmt. Es zeigt:
- Figur 1: eine schematische Darstellung eines bevorzugten Ausführungsbeispiels eines erfindungsgemäßen Schienenfahrzeugs mit einem bevorzugten Ausführungsbeispiel einer erfindungsgemäßen Steuervorrichtung ;
- Figur 2: ein Flussdiagramm eines bevorzugten Ausführungsbeispiels eines erfindungsgemäßen Steuerungsverfahrens, welches bei dem Schienenfahrzeug aus Figur 1 zur Anwendung kommen kann.

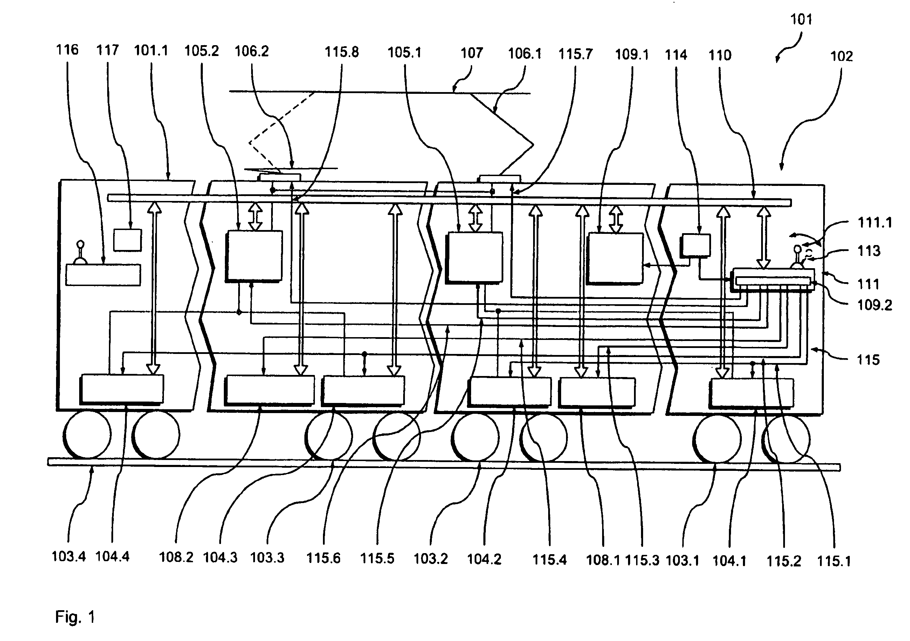

Figur 1 zeigt eine schematische Darstellung eines bevorzugten Ausführungsbeispiels eines erfindungsgemäßen Fahrzeugs in Form eines Schienenfahrzeugs 101 mit einem bevorzugten Ausführungsbeispiel einer erfindungsgemäßen Steuervorrichtung 102. Das Fahrzeug 101 umfasst eine Mehrzahl von miteinander gekoppelten Wagen 101.1, die (gegebenenfalls neben einer Reihe von nicht angetriebenen Fahrwerken) auf einer Reihe von angetriebenen Fahrwerken 103.1 bis 103.4 abgestützt sind.

Jedem angetriebenen Fahrwerk 103.1 bis 103.4 ist eine Traktionssteuerung 104.1 bis 104.4 der Steuervorrichtung 102 zugeordnet. Die jeweilige Traktionssteuerung 104.1 bis 104.4 steuert die (nicht dargestellten) Traktionseinrichtungen des zugehörigen Fahrwerks 103.1 bis 103.4.

Die angetriebenen Fahrwerke 103.1 bis 103.4 sind in zwei Fahrwerksgruppen aufgeteilt, denen jeweils eine Energieversorgungseinrichtung 105.1 bzw. 105.2 zugeordnet ist. So versorgt die erste Energieversorgungseinrichtung 105.1 die Traktionseinrichtungen des ersten Fahrwerks 103.1 und des zweiten Fahrwerks 103.2, während die zweite Energieversorgungseinrichtung 105.2 die Traktionseinrichtungen des dritten Fahrwerks 103.3 und des vierten Fahrwerks 103.4 versorgt. Hierzu sind die Energieversorgungseinrichtungen 105.1 und 105.2 jeweils mit einem Stromabnehmer 106.1 bzw. 106.2 verbunden, von denen im Normalbetrieb (abhängig von der primären Fahrtrichtung) nur einer mit einer Oberleitung 107 in Kontakt gebracht ist.

Jeder Fahrwerksgruppe ist weiterhin eine Bremssteuerung 108.1 bzw. 108.2 der Steuervorrichtung 102 zugeordnet, welche die Bremseinrichtungen der zugehörigen Fahrwerke ansteuert. So werden die Bremseinrichtungen des ersten Fahrwerks 103.1 und des zweiten Fahrwerks 103.2 durch die erste Bremssteuerung 108.1 angesteuert, während die Bremseinrichtungen des dritten Fahrwerks 103.3 und des vierten Fahrwerks 103.4 durch die zweite Bremssteuerung 108.2 angesteuert werden.

Es versteht sich hierbei, dass bei anderen Varianten der Erfindung auch eine Aufteilung in mehr als zwei Fahrwerksgruppen vorgesehen sein kann, denen dann jeweils eine separate Energieversorgungseinrichtung und/oder eine separate Bremssteuerung zugeordnet ist. Ebenso versteht es sich, dass bei anderen Varianten der Erfindung auch vorgesehen sein kann, dass für jedes angetriebene Fahrwerk eine separate Energieversorgungseinrichtung und/oder eine separate Bremssteuerung vorgesehen sein kann.

Die Steuervorrichtung 102 umfasst eine übergeordnete erste Fahrzeugsteuerung 109.1, die im Normalbetrieb bzw. Normalbetriebszustand des Fahrzeugs 101 über einen ersten Steuerpfad in Form eines Datenbusses 110 (beispielsweise ein so genannter Fahrzeugbus bzw. MVB) mit den Traktionssteuerungen 104.1 bis 104.4, den Energieversorgungseinrichtungen 105.1 und 105.2 sowie den Bremssteuerungen 108.1 bis 108.4 verbunden ist.

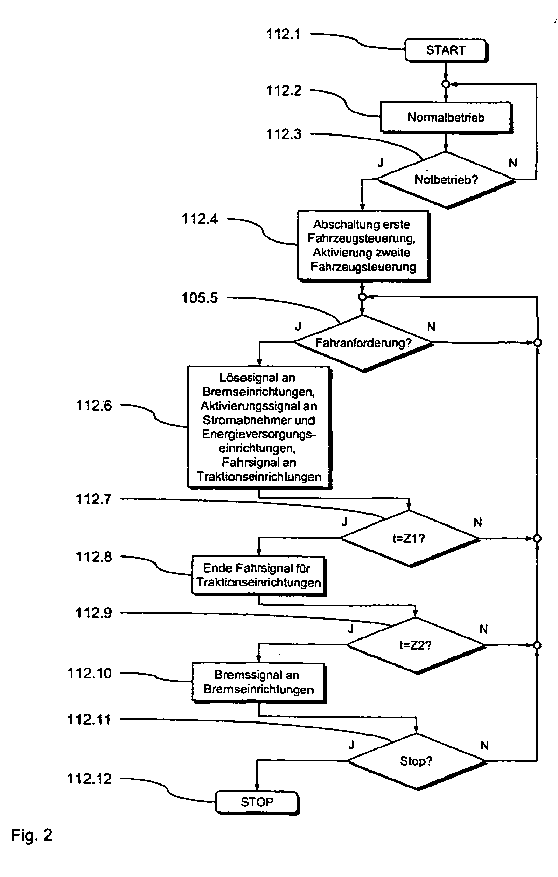

Die Steuervorrichtung 102 steuert das Fahrzeug 101 gemäß einer bevorzugten Variante des erfindungsgemäßen Steuerungsverfahrens, wie sie in Figur 2 dargestellt ist. Zunächst wird das Verfahren in einem Schritt 112.1 gestartet und in einem Schritt 112.2 in den Normalbetrieb übergegangen.

Im Normalbetrieb des Fahrzeugs 101 steuert diese übergeordnete erste Fahrzeugsteuerung 109.1 die Traktionssteuerungen 104.1 bis 104.4, die Energieversorgungseinrichtungen 105.1, 105.2 sowie die Bremssteuerungen 108.1 bis 108.4 an. Die Ansteuerung erfolgt dabei in Abhängigkeit von den Vorgaben des Fahrzeugführers, welche dieser beispielsweise über das Fahrerpult 111 tätigt, das im Normalbetrieb ebenfalls über den Datenbus 110 mit der ersten Fahrzeugsteuerung 109.1 verbunden ist.

Im Normalbetrieb erhält die erste Fahrzeugsteuerung 109.1 von den Traktionssteuerungen 104.1 bis 104.4, den Energieversorgungseinrichtungen 105.1, 105.2, den Bremssteuerungen 108.1 bis 108.4 sowie gegebenenfalls von weiteren im oder am Fahrzeug angeordneten (nicht dargestellten) Sensoren (beispielsweise Temperaturfühlern, Brandmeldern, Türsensoren, Notbremsschaltern etc.) Informationen über den aktuellen Zustand der jeweiligen Komponente. Diese Informationen können über den Datenbus 110 oder eine separate Verbindung an die erste Fahrzeugsteuerung 109.1 übermittelt werden.

Anhand dieser Zustandsinformationen über die Komponenten des Fahrzeugs 101 werden in der ersten Fahrzeugsteuerung 109.1 Entscheidungen über die Ansteuerung der jeweiligen Komponenten des Fahrzeugs 101 getroffen. In dem Fahrzeug 101 ist im Normalbetrieb ein hinlänglich bekanntes Sicherheitskonzept realisiert, gemäß dem in einer Reihe von eine Gefahrensituation repräsentierenden Konstellationen die erste Fahrzeugsteuerung 109.1 entscheidet, eine Notbremsung durchzuführen.

Eine solche Konstellation, die eine Gefahrensituation repräsentiert und somit eine Notbremsung auslöst, kann bei Vorliegen einer Reihe von Signalen bzw. Signalkombinationen (z. B. Überhitzung einer Komponente, Ansprechen eines Brandmelders, unterbrochene Grünschleife, eingelegte bzw. blockierende mechanische Bremse, geöffnete Türen, betätigte Notbremse, aktivierte Zwangsbremse, Ausfall der Fahrzeugsteuerung, Fehler bzw. Störung der Energieversorgung, defekter Sollwertgeber, Ausfall mehrerer Antriebe etc.) gegeben sein.

Stellt die erste Fahrzeugsteuerung 109.1 eine solche Gefahrensituation fest, so wird das Fahrzeug 101 unmittelbar durch einen Bremseingriff zum Stillstand gebracht, um eine Gefährdung der Passagiere oder des Umfelds des Fahrzeugs zu reduzieren. In diesem Fall spricht man auch von dem Prinzip "Stop bei Gefahr". Der Bremseingriff erfolgt dabei unabhängig davon, ob ein Fahrbefehl bzw. eine Fahranforderung seitens des Fahrzeugführers über das Fahrerpuft 111 vorliegt, mithin also unabhängig davon, ob der Fahrzeugführer den Fahrhebel 111.1 ganz oder teilweise aus seiner neutralen Stellung ausgelenkt hat (wie dies in Figur 1 durch die gestrichelte Kontur 113 angedeutet ist).

Dieses Sicherheitskonzept weist jedoch den Nachteil auf, dass in bestimmten Gefahrensituationen ein unmittelbarer Stillstand des Fahrzeugs 101 vermieden werden sollte. Kommt es beispielsweise in einem Tunnel zu einem Brand in dem Fahrzeug 101, sollte dieses nach Möglichkeit erst in dem nächstgelegenen Bahnhof oder an einer anderen Stelle mit einer geeigneten Fluchtmöglichkeit für die Passagiere zum Stillstand kommen, um eine zügige und effektive Evakuierung der Fahrgäste aus dem Gefahrenbereich zu ermöglichen.

Um die Weiterfahrt des Fahrzeugs 101 in einer solchen Gefahrensituation zu ermöglichen ist vorgesehen, dass der Fahrzeugführer über ein (bewusst und vorzugsweise nicht versehentlich betätigbares) Betätigungselement 114 in einen Sonderbetriebszustand bzw. Sonderbetrieb umschalten kann. Im Rahmen des Steuerungsverfahrens wird daher in einem Schritt 112.3 überprüft, ob ein entsprechendes Schaltsignal an dem Betätigungselement 114 anliegt und daher in den Sonderbetrieb geschaltet werden soll.

Ist dies nicht der Fall, wird zurück zu dem Schritt 112.2 gesprungen. Andernfalls wird in einem Schritt 112.4 die erste Fahrzeugsteuerung 109.1 deaktiviert und eine (im vorliegenden Beispiel in dem Fahrerpult 111 integrierte) zweite Fahrzeugsteuerung 109.2 der Steuervorrichtung 102 aktiviert.

Die zweite Fahrzeugsteuerung 109.2 ist über einen von dem Datenbus 110 (erster Steuerpfad) verschiedenen zweiten Steuerpfad 115 mit den Traktionssteuerungen 104.1 bis 104.4, den Energieversorgungseinrichtungen 105.1, 105.2, den Bremssteuerungen 108.1, 108.2 und den Stromabnehmern 106.1, 106.2 verbunden. Die Verbindung erfolgt dabei jeweils über eine fest verschaltete Signalleitung 115.1 bis 115.8.

In dem zweiten Steuerpfad 115 wird im vorliegenden Beispiel jeweils eine zweisträngige Verschaltung je durch die zweite Fahrzeugsteuerung 109.2 angesteuertem Steuerungstyp (Traktionssteuerung, Steuerung einer Energieversorgungseinrichtung, Bremssteuerung, Steuerung eines Stromabnehmers etc.) realisiert. Es versteht sich jedoch, dass bei anderen Varianten der Erfindung (gegebenenfalls je Steuerungstyp) auch eine beliebige andere Anzahl von Steuerungssträngen je angesteuertem Steuerungstyp realisiert sein kann.

Im vorliegenden Beispiel sind die erste Traktionssteuerung 104.1 und die zweite Traktionssteuerung 104.2 über die erste Signalleitung 115.1 mit der zweiten Fahrzeugsteuerung 109.2 verbunden, während die dritte Traktionssteuerung 104.3 und die vierte Traktionssteuerung 104.4 über die zweite Signalleitung 115.2 mit der zweiten Fahrzeugsteuerung 109.2 verbunden sind. Die erste Signalleitung 115.1 und die zweite Signalleitung 115.2 sind signaltechnisch und räumlich voneinander getrennt (z. B. auf unterschiedlichen Seiten des Fahrzeugs 101 verlegt), sodass zum einen eine Störung in der einen Signalleitung 115.1 bzw. 115.2 nicht die andere Signalleitung 115.2 bzw. 115.1 beeinträchtig und zum anderen die Wahrscheinlichkeit reduziert ist, dass eine externe Störung beide Signalleitungen 115.1 und 115.2 in Mitleidenschaft zieht.

Analog ist im vorliegenden Beispiel die erste Bremssteuerung 108.1 über die dritte Signalleitung 115.3 mit der zweiten Fahrzeugsteuerung 109.2 verbunden, während die zweite Bremssteuerung 108.2 über die vierte Signalleitung 115.4 mit der zweiten Fahrzeugsteuerung 109.2 verbunden sind. Die dritte Signalleitung 115.3 und die vierte Signalleitung 115.4 sind wiederum signaltechnisch und räumlich voneinander getrennt (z. B. auf unterschiedlichen Seiten des Fahrzeugs 101 verlegt), sodass sie in der oben beschriebenen Weise einander nicht beeinflussen und Wahrscheinlichkeit einer gemeinsamen Beeinträchtigung durch eine externe Störung reduziert ist.

In vergleichbarer Weise ist im vorliegenden Beispiel die Steuerung der ersten Energieversorgungseinrichtung 105.1 über die fünfte Signalleitung 115.5 mit der zweiten Fahrzeugsteuerung 109.2 verbunden, während die Steuerung der zweiten Energieversorgungseinrichtung 105.2 über die sechste Signalleitung 115.6 mit der zweiten Fahrzeugsteuerung 109.2 verbunden sind. Die fünfte Signalleitung 115.5 und die sechste Signalleitung 115.6 sind wiederum signaltechnisch und räumlich voneinander getrennt (z. B. auf unterschiedlichen Seiten des Fahrzeugs 101 verlegt), sodass sie in der oben beschriebenen Weise einander nicht beeinflussen und Wahrscheinlichkeit einer gemeinsamen Beeinträchtigung durch eine externe Störung reduziert ist.

In analoger Weise ist im vorliegenden Beispiel schließlich die Steuerung des ersten Stromabnehmers 106.1 über die siebte Signalleitung 115.7 mit der zweiten Fahrzeugsteuerung 109.2 verbunden, während die Steuerung des zweiten Stromabnehmers 106.2 über die achte Signalleitung 115.8 mit der zweiten Fahrzeugsteuerung 109.2 verbunden sind. Die siebte Signalleitung 115.7 und die achte Signalleitung 115.8 sind wiederum signaltechnisch und räumlich voneinander getrennt (z. B. auf unterschiedlichen Seiten des Fahrzeugs 101 verlegt), sodass sie in der oben beschriebenen Weise einander nicht beeinflussen und Wahrscheinlichkeit einer gemeinsamen Beeinträchtigung durch eine externe Störung reduziert ist.

Durch die beschriebene Abschaltung der ersten Fahrzeugsteuerung 109.1 und des ersten Steuerpfades 110 sowie die Aktivierung der zweiten Steuereinrichtung 109.2 und des zweiten Steuerpfades mit der oben beschriebenen fest verschalteten Konfiguration wird erreicht, dass zum einen unmittelbar sämtliche Signale, welche im Normalbetrieb zu einer Notbremsung führen, ausgeblendet werden können und die weitere Steuerung damit nicht mehr beeinträchtigen bzw. im Rahmen dieser Steuerung nicht mehr verarbeitet werden müssen. Somit kann die Steuerung in dem Sonderbetrieb besonders einfach und robust aufgebaut sein.

Nach dem Umstellen auf den Sonderbetrieb wird einem Schritt 112.5 überprüft, ob eine Fahranforderung durch den Fahrzeugführer vorliegt, indem dieser den Fahrhebel 111.1 entsprechend auslenkt. Ist dies der Fall, sendet die zweite Steuereinrichtung 109.2 in einem Schritt 112.6 über die Signalleitungen 115.3 und 115.4 jeweils ein Lösesignal an die jeweilige Bremssteuerung 108.1 und 108.2, welches jegliches an den Bremssteuerungen 108.1 und 108.2 anliegende Bremssignal aufhebt und (bei intakter Signalverarbeitung in den Bremssteuerungen 108.1 und 108.2 sowie intakten Bremseinrichtungen) zu einem Lösen der Bremseinrichtungen sämtlicher Fahrwerke 103.1 bis 103.4 führt.

Weiterhin sendet die zweite Steuereinrichtung 109.2 jeweils ein Fahrsignal über die beiden Signalleitungen 115.1 und 115.2 an die Traktionssteuerungen 104.1 bis 104.4, welches jegliches an den Traktionssteuerungen 104.1 bis 104.4 anliegende Abschaltsignal aufhebt und (bei intakter Signalverarbeitung in den Traktionssteuerungen 104.1 bis 104.4 sowie intakten Traktionseinrichtungen) zu einer Aktivierung und Betätigung der Traktionseinrichtungen der Fahrwerke 103.1 bis 103.4 führt.

Mit anderen Worten ist hierdurch in dem Sonderbetrieb eine Umkehrung der Prioritäten zwischen einer Fahranforderung bzw. einem Fahrsignal und einer Bremsanforderung bzw. einem Bremssignal realisiert. Dies kann im einfachsten Fall dadurch realisiert werden, dass verhindert wird, dass ein (wodurch auch immer bedingtes) Bremssignal zu den Bremssteuerungen 108.1 und 108.2 weitergeleitet wird, solange ein Fahrsignal für die Traktionssteuerungen 104.1 bis 104.4 an den Signalleitungen 115.1 und 115.2 anliegt. Eine die Traktionseinrichtungen aktivierende Fahranforderung wird also in jedem Fall vorrangig vor einer die Bremseinrichtungen aktivierenden Bremsanforderung behandelt. Das durch den Fahrzeugführer bewusst und (wie nachfolgend noch näher erläutert wird) nachhaltig ausgelöste Weiterfahren des Fahrzeugs 101 hat in dem Sonderbetrieb somit absoluten Vorrang vor einer wodurch auch immer ausgelösten Bremsanforderung.

Ausgelöst durch die Fahranforderung sendet die zweite Steuereinrichtung 109.2 weiterhin zum einen jeweils ein Aktivierungssignal über die beiden Signalleitungen 115.5 und 115.6 an die Energieversorgungseinrichtungen 105.1 und 105.2, welches jegliches an den Energieversorgungseinrichtungen 105.1 und 105.2 anliegende Abschaltsignal aufhebt und (bei intakter Signalverarbeitung in den Steuerungen der Energieversorgungseinrichtungen 105.1 und 105.2 sowie intakten Energieversorgungseinrichtungen 105.1 und 105.2) zu einer Aktivierung der Energieversorgungseinrichtungen 105.1 und 105.2 führt.

Zum anderen sendet die zweite Steuereinrichtung 109.2 ausgelöst durch die Fahranforderung weiterhin jeweils ein Aktivierungssignal über die beiden Signalleitungen 115.7 und 115.8 an die Steuerungen der Stromabnehmer 106.1 und 106.2, welches jegliches an den Steuerungen der Stromabnehmer 106.1 und 106.2 anliegende Abschaltsignal aufhebt und (bei intakter Signalverarbeitung in den Steuerungen der Stromabnehmer 106.1 und 106.2 sowie intakten Stromabnehmern 106.1 und 106.2) zu einer Aktivierung der Stromabnehmer 106.1 und 106.2 sowie einer Verriegelung der Stromabnehmer 106.1 und 106.2 in ihrer ausgefahrenen Position (Kontakt mit der Oberleitung 107) führt.

Durch alle diese Maßnahmen ist in vorteilhafter Weise sichergestellt, dass die funktionsfähigen Traktionseinrichtungen der Fahrwerke 103.1 bis 103.4 aktiviert und über die funktionsfähigen Stromabnehmer 106.1, 106.2 und die Energieversorgungseinrichtungen 108.1, 108.2 mit Energie versorgt werden. Zudem wird sichergestellt, dass die funktionsfähigen Bremseinrichtungen gelöst werden, sodass das Fahrzeug 101 weiter gefahren werden kann.

Im vorliegenden Beispiel ist die Aufteilung der Traktionseinrichtungen auf die erste Signalleitung 115.1 und die zweite Signalleitung so gewählt, dass jeweils 50% der Traktionseinrichtungen des Fahrzeugs 101 über eine der beiden Signalleitungen 115.1 und 115.2 angesteuert werden. Es versteht sich jedoch, dass bei anderen Varianten der Erfindung auch eine andere Aufteilung vorgesehen sein kann. Wie bereits oben erläutert wurde, ist die Aufteilung bevorzugt so vorgenommen, dass bei Ausfall der Traktionseinrichtungen, die über eine der Signalleitungen angesteuert werden, die summierte Traktionsleistung der Traktionseinrichtungen, die über die andere Signalleitung angesteuert werden, ausreicht, um das Fahrzeug weiterhin zu bewegen. Hiermit ist sichergestellt, dass das Fahrzeug auch beim Ausfall eines Teils der Traktionseinrichtungen immer noch zu einem sicheren Halteplatz bewegt werden kann.

Im vorliegenden Beispiel reicht die summierte Traktionsleistung der über die erste Signalleitung 115.1 angesteuerten Traktionseinrichtungen aus, um das Fahrzeug bei Blockieren aller Bremseinrichtungen des Fahrzeugs 101 weiterhin zu bewegen. Gleiches gilt für die summierten Traktionsleistung der über die zweite Signalleitung 115.2 angesteuerten Traktionseinrichtungen. Somit ist sichergestellt, dass das Fahrzeug 101 auch beim Ausfall von 50% der Traktionseinrichtungen und vollständig blockierenden Bremsen (wenn auch mit entsprechend geringer Geschwindigkeit) immer noch zu einem sicheren Hafteplatz bewegt werden kann.

Die Aufteilung der Bremseinrichtungen auf die Signalleitungen 115.3 und 115.4 erfolgt in analoger Weise, sodass jeweils 50% der Bremseinrichtungen des Fahrzeugs 101 über eine der beiden Signalleitungen 115.3 und 115.4 angesteuert werden. Vergleichbares gilt für die Aufteilung der Energieversorgungseinrichtungen 105.1, 105.2 bzw. der Stromabnehmer 106.1, 106.2 auf die Signalleitungen 115.5, 115.6 bzw. 115.7, 115.8.

Mit den oben beschriebenen Maßnahmen in dem Schritt 112.6, wird in den Sonderbetrieb bei einer ausreichenden Anzahl intakter Komponenten des Fahrzeugs 101 ein Weiterfahren bis zu einem sicheren Haltepunkt ermöglicht. Hierbei wird unter anderem in Kauf genommen, dass gegebenenfalls einzelne gefährdete oder bereits beschädigte Komponenten des Fahrzeugs 101 durch ihre weitere Nutzung in dem Sonderbetrieb eine (weitere) Beschädigung erfahren. Dies wird jedoch im Hinblick auf die vorrangige Beseitigung der Gefährdung für die Passagiere des Fahrzeugs 101 akzeptiert.

Nach Durchführung der oben beschriebenen Maßnahmen in dem Schritt 112.6, die (bei einer ausreichenden Anzahl intakter Komponenten des Fahrzeugs 101) zu einem Weiterfahren des Fahrzeugs 101 führt, wird in einem Schritt 112.7 überprüft, ob seit der letzten Erneuerung der Fahranforderung durch den Fahrzeugführer eine erste Zeitspanne Z1, beispielsweise 30 s, abgelaufen ist. Die Erneuerung der Fahranforderung erfolgt im vorliegenden Beispiel dadurch, dass der Fahrzeugführer den ausgelenkten Fahrhebel 111.1 wieder in seine in Figur 1 dargestellte neutrale Stellung (Nullstellung) die zurückführt und dann erneut in eine Fahrposition (gestrichelte Kontur 113 in Figur 1) auslenkt.

Ist die erste Zeitspanne Z1 ohne Erneuerung der Fahranforderung abgelaufen, sendet die zweite Fahrzeugsteuerung 109.2 in einem Schritt 112.8 ein Traktionsstopsignal über die Signalleitungen 115.1 und 115.2 an die Traktionssteuerungen 104.1 bis 104.4, welches zu einer Deaktivierung der Traktionseinrichtungen führt.

Anschließend wird in einem Schritt 112.9 überprüft, ob seit der letzten Erneuerung der Fahranforderung durch den Fahrzeugführer eine zweite Zeitspanne Z2 abgelaufen ist, wobei die zweite Zeitspanne Z2 größer ist als die erste Zeitspanne Z1 (und beispielsweise 45 s beträgt). Ist dies der Fall und sind auch keine weiteren relevanten Eingaben durch den Fahrzeugführer an dem Fahrerpult 111 getätigt worden, sendet die zweite Fahrzeugsteuerung 109.2 in einem Schritt 112.10 über die Signalleitungen 105.3 und 105.4 jeweils ein Bremssignal an die Bremssteuerungen 108.1 und 108.2, welches zu einer Aktivierung der Bremseinrichtungen und damit einer Notbremsung führt.

Über die Schritte 112.7 bis 112.10 ist mit anderen Worten also eine so genannte Totmannfunktion realisiert, über die bei einem Ausfall des Fahrzeugführers nach Aktivieren des Sonderbetriebs sichergestellt ist, dass das Fahrzeug nicht unkontrolliert weiterfahren kann.

In einem Schritt 112.11 wird schließlich überprüft, ob der Verfahrensablauf beendet werden soll. Ist dies der Fall, wird der Verfahrensablauf in einem Schritt 112.12 beendet. Andernfalls wird zu dem Schritt 112.5 zurück gesprungen. Ein erneuter Übergang in den Normalbetrieb (Rückkehr zu Schritt 112.2) ist im vorliegenden Beispiel nicht vorgesehen. Vielmehr muss nach einmaliger Aktivierung des Sonderbetriebs eine entsprechende Wartung des Fahrzeugs 101 erfolgen. Es versteht sich jedoch, dass der anderen Varianten der Erfindung gegebenenfalls nach einem entsprechenden Überprüfungsschritt auch eine solche Rückkehr zu dem Schritt 112.2 vorgesehen sein kann.

In dem Sonderbetrieb kann vorgesehen sein, dass durch die zweite Fahrzeugsteuerung 109.2 an die (in Figur 1 nicht dargestellten) Türsteuerungseinheiten der Türen des Fahrzeugs 101 stets die Signale "Türfreigabe" und "Fahrzeugstillstand" angelegt werden, sodass die Türen zu jeder Zeit geöffnet werden können, um eine schnelle Evakuierung der Passagiere zu ermöglichen.

Wird in dem Sonderbetrieb ein Ort erreicht, der einen sicheren Ausstieg der Passagiere erlaubt, beispielsweise ein Bahnhof oder ein Notausstieg in einem Tunnel, so kann der Fahrzeugführer zu jedem Zeitpunkt die Fahranforderung aufheben und einen Bremsbefehl erzeugen, den die zweite Fahrzeugsteuerung 109.2 über die Signalleitungen 115.3, 115.4 an die Bremssteuerungen 108.1, 108.2 sendet, um das Fahrzeug 101 über die Bremseinrichtungen zum Stillstand zu bringen.

Schließlich kann die zweite Fahrzeugsteuerung 109.2 ausgelöst durch eine entsprechende Eingabe des Fahrzeugführers im Stillstand ein Öffnungssignal an die Türsteuerungseinheiten übertragen werden, sodass sich die Türen öffnen und ein sicherer Ausstieg für die Passagiere möglich ist.

Die zweite Fahrzeugsteuerung 109.2 ist im vorliegenden Beispiel so ausgebildet, dass sie lediglich eine oder mehrere einfache Betätigungseinrichtungen umfasst, welche an der jeweiligen Signalleitung 115.1 bis 115.8 ein Signal entsprechend den obigen Erläuterungen anlegt bzw. anlegen. Dabei können einfache, bevorzugt fest verdrahtete Logikbausteine verwendet werden, um die oben beschriebenen Signalverknüpfungen, Bedingungen und Abfragen (Totmannfunktion etc.) zu realisieren.

Mit anderen Worten wird also für die zweite Fahrzeugsteuerung 109.2 im vorliegenden Beispiel auf eine mikroprozessorgestützte Steuerung (die häufig auch als elektronische Steuerung bezeichnet wird) verzichtet. Hierdurch ist für den Sonderbetrieb eine besonders kostengünstige, robuste und wenig störungsanfällige Ansteuerung der dezentralen Steuerungseinrichtungen der anzusteuernden Fahrzeugkomponenten (also hier der Traktionssteuerungen 104.1 bis 104.4, der Steuerungseinrichtungen der Energieversorgungseinrichtungen 105.1, 105.2, der Bremssteuerungen 108.1, 108.2 und der Steuerungseinrichtungen der Stromabnehmer 106.1, 106.2) sichergestellt.

Diese dezentralen Steuerungseinrichtungen sind wiederum typischerweise als mikroprozessorgestützte (elektronische) Steuerungseinrichtungen ausgebildet und verarbeiten die über die Signalleitungen 115.1 bis 115.8 gelieferten Signale der zweiten Fahrzeugsteuerung 109.2 in der entsprechenden Weise.

Ein weiterer Vorteil dieser Gestaltung liegt darin, dass sich die Sicherheit dieses Systems (aus der zweiten Fahrzeugsteuerung 109.2 und den Signalleitungen 115.1 bis 115.8) besonders einfach testen und nachweisen lässt, sodass die erfindungsgemäße Steuerung auch hinsichtlich der Zulassung eines damit ausgestatteten Fahrzeugs von besonderem Vorteil ist.

Es versteht sich jedoch, dass bei anderen Varianten der Erfindung auch für die zweite Fahrzeugsteuerung wiederum eine ganz oder teilweise mikroprozessorgestützte Steuerung verwendet werden kann, sofern eine entsprechend hohe Ausfallsicherheit gewährleistet werden kann.

Wie der Figur 1 weiterhin zu entnehmen ist, weist das Fahrzeug 101 an seinem anderen Fahrzeugende einen weiteren Führerstand mit einem weiteren Fahrerpult 116 auf, welches in analoger Weise zu dem Fahrerpult 111 gestaltet und mit den übrigen Komponenten der Steuereinrichtung 102 verbunden ist. Ebenso ist auch in diesem weiteren Führerstand eine Betätigungseinrichtung 117 vorgesehen, welche in analoger Weise zu der Betätigungseinrichtung 114 gestaltet und mit den übrigen Komponenten der Steuereinrichtung 102 verbunden ist.

Die vorliegende Erfindung wurde vorstehend ausschließlich anhand von eines Beispiels eines Schienenfahrzeugs beschrieben. Es versteht sich jedoch, dass sich die vorliegende Erfindung auch auf beliebige andere Fahrzeuge anwenden lässt, bei denen ein entsprechender Sonderbetrieb erforderlich werden kann, um Gefahren für die Passagiere oder Passanten außerhalb des Fahrzeugs abzuwenden.

## Patentansprüche

1. Steuervorrichtung für ein Fahrzeug, insbesondere ein Schienenfahrzeug, mit
- einer Traktionssteuerung (104.1 bis 104.4) zum Ansteuern von Traktionseinrichtungen des Fahrzeugs, einer Bremssteuerung (108.1, 108.2) zum Ansteuern von Bremseinrichtungen des Fahrzeugs und einer übergeordneten ersten Fahrzeugsteuerung (109.1) zum Ansteuern der Traktionssteuerung (104.1 bis 104.4) und der Bremssteuerung (108.1, 108.2) über einen ersten Steuerpfad (110), insbesondere ein Datenbussystem, wobei
- die erste Fahrzeugsteuerung (109.1) dazu ausgebildet ist, in einem Normalbetriebzustand der Steuervorrichtung die Traktionssteuerung (104.1 bis 104.4) und die Bremssteuerung (108.1, 108.2) derart anzusteuern, dass in einer erkannten Notfallsituation eine die Aktivierung der Bremseinrichtungen bewirkende Ansteuerung vorrangig vor einer die Aktivierung der Traktionseinrichtungen bewirkenden Ansteuerung erfolgt,
**dadurch gekennzeichnet, dass**
- eine zweite Fahrzeugsteuerung (109.2) zum Ansteuern der Traktionssteuerung (104.1 bis 104.4) und der Bremssteuerung (108.1, 108.2) über einen zweiten Steuerpfad (115) vorgesehen ist, wobei
- der zweite Steuerpfad (115) von dem ersten Steuerpfad (110) verschieden ist,
- die Steuereinrichtung dazu ausgebildet ist, in einem Sonderbetriebszustand die erste Fahrzeugsteuerung (109.1) zu deaktivieren und die zweite Fahrzeugsteuerung (109.2) zu aktivieren, und
- die zweite Fahrzeugsteuerung (109.2) dazu ausgebildet ist, in dem Sonderbetriebzustand die Traktionssteuerung (104.1 bis 104.4) und die Bremssteuerung (108.1, 108.2) derart anzusteuern, dass eine die Aktivierung der Traktionseinrichtungen bewirkende Ansteuerung vorrangig vor einer die Aktivierung der Bremseinrichtungen bewirkenden Ansteuerung erfolgt.

2. Steuervorrichtung nach Anspruch 1, **dadurch gekennzeichnet, dass**
- ein Fahrbefehlssignal an die Traktionssteuerung (104.1 bis 104.4) eine Betätigung von Traktionseinrichtungen des Fahrzeugs auslöst,
- ein Lösebefehlssignal an die Bremssteuerung (108.1, 108.2) ein Lösen von Bremseinrichtungen des Fahrzeugs auslöst und
- die zweite Fahrzeugsteuerung (109.2) derart ausgebildet ist, dass sie bei einer eingehenden Fahranforderung in dem Sonderbetriebzustand ein Fahrbefehlsignal an die Traktionssteuerung (104.1 bis 104.4) und ein Lösebefehls signal an die Bremssteuerung (108.1, 108.2) absetzt.

3. Steuervorrichtung nach Anspruch 1 oder 2, **dadurch gekennzeichnet, dass**
- eine Energieversorgungseinrichtung (105.1, 105.2) zur Versorgung wenigstens eines Teils der Traktionseinrichtungen des Fahrzeugs vorgesehen ist, wobei die zweite Fahrzeugsteuerung (109.2) derart ausgebildet ist, dass sie in dem Sonderbetriebzustand zumindest bei einer eingehenden Fahranforderung ein Aktivierungssignal zur Aktivierung der Energieversorgungseinrichtung (105.1, 105.2) generiert,
und/oder
- der Sonderbetriebszustand manuell aktivierbar ist.

4. Steuervorrichtung nach einem der vorhergehenden Ansprüche, **dadurch gekennzeichnet, dass**
- der erste Steuerpfad (110) ein Datenbussystem umfasst und/oder
- der zweite Steuerpfad (115) eine direkte Signalleitung (115.1 bis 115.8) zwischen der zweiten Fahrzeugsteuerung (109.2) und wenigstens einer in dem Sonderbetriebszustand anzusteuernden Komponente der Traktionseinrichtungen oder der Bremseinrichtungen umfasst,
wobei.
- der zweite Steuerpfad (115) insbesondere jeweils eine fest verschaltete Signalleitung (115.1 bis 115.8) zwischen der zweiten Fahrzeugsteuerung (109.2) und allen in dem Sonderbetriebszustand anzusteuernden Komponenten der Traktionseinrichtungen und der Bremseinrichtungen umfasst.

5. Steuervorrichtung nach einem der vorhergehenden Ansprüche, **dadurch gekennzeichnet, dass**
- eine Mehrzahl von separaten Traktionseinrichtungen vorgesehen ist und der zweite Steuerpfad (115) eine erste Signalleitung (115.1) und eine zweite Signalleitung (115.2) umfasst, wobei die erste Signalleitung (115.1) mit einem ersten Teil (104.1, 104.2) der Traktionseinrichtungen verbunden ist und die zweite Signalleitung (115.2) mit einem zweiten Teil (104.3, 104.4) der Traktionseinrichtungen verbunden ist,
wobei
- der erste Teil (104.1, 104.2) der Traktionseinrichtungen insbesondere wenigstens 50% der Traktionseinrichtungen des Fahrzeugs umfasst
und/oder
- die erste Signalleitung (115.1) und die zweite Signalleitung (115.2) insbesondere räumlich getrennt und/oder signaltechnisch getrennt voneinander angeordnet sind
und/oder
- der erste Teil (104.1, 104.2) der Traktionseinrichtungen und/oder der zweite Teil (104.3, 104.4) der Traktionseinrichtungen insbesondere einen Anteil der Traktionseinrichtungen umfasst, dessen summierte Traktionsleistung ausreicht, um das Fahrzeug bei einem Ausfall des anderen Teils der Traktionseinrichtungen weiterhin zu bewegen, wobei der erste Teil (104.1, 104.2) der Traktionseinrichtungen und/oder der zweite Teil (104.3, 104.4) der Traktionseinrichtungen insbesondere einen Anteil der Traktionseinrichtungen umfasst, dessen summierte Traktionsleistung ausreicht, um das Fahrzeug bei Blockieren zumindest eines Teils der Bremseinrichtungen, insbesondere aller Bremseinrichtungen, des Fahrzeugs weiterhin zu bewegen.

6. Steuervorrichtung nach einem der vorhergehenden Ansprüche, **dadurch gekennzeichnet, dass**
- eine Mehrzahl von separaten Bremseinrichtungen vorgesehen ist und der zweite Steuerpfad (115) eine dritte Signalleitung (115.3) und eine vierte Signalleitung (115.4) umfasst, wobei die dritte Signalleitung (115.3) mit einem ersten Teil (108.1) der Bremseinrichtungen verbunden ist und die vierte Signalleitung (115.4) mit einem zweiten Teil (108.2) der Bremseinrichtungen verbunden ist,
wobei
- der erste Teil (108.1) der Bremseinrichtungen insbesondere wenigstens 50% der Bremseinrichtungen des Fahrzeugs umfasst
und/oder
- die dritte Signalleitung und die vierte Signalleitung insbesondere räumlich getrennt und/oder signaltechnisch getrennt voneinander angeordnet sind.

7. Steuervorrichtung nach einem der vorhergehenden Ansprüche, **dadurch gekennzeichnet, dass**
- eine Mehrzahl von separaten Energieversorgungseinrichtungen (105.1, 105.2) zur Versorgung der Traktionseinrichtungen des Fahrzeugs vorgesehen ist und der zweite Steuerpfad (115) eine fünfte Signalleitung (115.5) und eine sechste Signalleitung (115.6) umfasst, wobei die fünfte Signalleitung (115.5) mit einem ersten Teil (105.1) der Energieversorgungseinrichtungen (105.1, 105.2) verbunden ist und die sechste Signalleitung (115.6) mit einem zweiten Teil (105.2) der Energieversorgungseinrichtungen (105.1, 105.2) verbunden ist,
wobei
- der erste Teil (105.1) der Energieversorgungseinrichtungen insbesondere wenigstens 50% der Energieversorgungseinrichtungen (105.1, 105.2) des Fahrzeugs umfasst
und/oder
- die fünfte Signalleitung (115.5) und die sechste Signalleitung (115.6) insbesondere räumlich getrennt und/oder signaltechnisch getrennt voneinander angeordnet sind.

8. Steuervorrichtung nach einem der vorhergehenden Ansprüche, **dadurch gekennzeichnet, dass**
- die zweite Fahrzeugsteuerung (109.2) derart ausgebildet ist, dass in dem Sonderbetriebszustand eine Fahranforderung nach einer ersten Zeitspanne seit Eintreffen der Fahranforderung bei fehlender Erneuerung der Fahranforderung aufgehoben wird,
und/oder
- die zweite Fahrzeugsteuerung (109.2) derart ausgebildet ist, dass in dem Sonderbetriebszustand nach einer zweiten Zeitspanne seit Eintreffen einer Fahranforderung bei fehlender Erneuerung der Fahranforderung eine Aktivierung der Bremseinrichtungen erfolgt, wobei
- die zweite Zeitspanne insbesondere länger als die erste Zeitspanne ist.

9. Steuervorrichtung nach einem der vorhergehenden Ansprüche, **dadurch gekennzeichnet, dass**
- die zweite Fahrzeugsteuerung (109.2) zumindest ein Betätigungselement (111.1) umfasst, das dazu ausgebildet ist, in dem Sonderbetriebszustand Steuerungsbefehle für die die Traktionssteuerung (104.1 bis 104.4) und/oder die Bremssteuerung (108.1, 108.2) zu erzeugen,
und/oder
- die zweite Fahrzeugsteuerung (109.2) ein Türbetätigungselement umfasst, das dazu ausgebildet ist, in dem Sonderbetriebszustand Steuerungsbefehle für zumindest eine Türsteuerungseinheit des Fahrzeugs zu erzeugen.

10. Fahrzeug, insbesondere Schienenfahrzeug, mit einer Steuervorrichtung (102) nach einem der vorhergehenden Ansprüche.

11. Verfahren zur Steuerung eines Fahrzeugs, insbesondere eines Schienenfahrzeugs, bei dem
- über eine Traktionssteuerung (104.1 bis 104.4) Traktionseinrichtungen des Fahrzeugs angesteuert werden, über eine Bremssteuerung (108.1, 108.2) Bremseinrichtungen des Fahrzeugs angesteuert werden und über eine übergeordnete erste Fahrzeugsteuerung (109.1) die Traktionssteuerung (104.1 bis 104.4) und die Bremssteuerung (108.1, 108.2) über einen ersten Steuerpfad (110), insbesondere ein Datenbussystem, angesteuert werden, wobei
- die erste Fahrzeugsteuerung (109.1) in einem Normalbetriebzustand die Traktionssteuerung (104.1 bis 104.4) und die Bremssteuerung (108.1, 108.2) derart ansteuert, dass in einer erkannten Notfallsituation eine die Aktivierung der Bremseinrichtungen bewirkende Ansteuerung vorrangig vor einer die Aktivierung der Traktionseinrichtungen bewirkenden Ansteuerung erfolgt,
**dadurch gekennzeichnet, dass**
- in einem Sonderbetriebszustand die erste Fahrzeugsteuerung (109.1) deaktiviert wird und eine zweite Fahrzeugsteuerung (109.2) aktiviert wird, wobei
- die zweite Fahrzeugsteuerung (109.2) die Traktionssteuerung (104.1 bis 104.4) und die Bremssteuerung (108.1, 108.2) über einen zweiten Steuerpfad (115) ansteuert, der von dem ersten Steuerpfad (110) verschieden ist, und
- die zweite Fahrzeugsteuerung (109.2) in dem Sonderbetriebzustand die Traktionssteuerung (104.1 bis 104.4) und die Bremssteuerung (108.1, 108.2) derart ansteuert, dass eine die Aktivierung der Traktionseinrichtungen bewirkende Ansteuerung vorrangig vor einer die Aktivierung der Bremseinrichtungen bewirkenden Ansteuerung erfolgt.

12. Verfahren nach Anspruch 11, **dadurch gekennzeichnet, dass**
- ein Fahrbefehlssignal an die Traktionssteuerung (104.1 bis 104.4) eine Betätigung von Traktionseinrichtungen des Fahrzeugs auslöst, ein Lösebefehlssignal an die Bremssteuerung (108.1, 108.2) ein Lösen von Bremseinrichtungen des Fahrzeugs auslöst und die zweite Fahrzeugsteuerung (109.2) bei einer eingehenden Fahranforderung in dem Sonderbetriebzustand ein Fahrbefehlsignal an die Traktionssteuerung (104.1 bis 104.4) und ein Lösebefehls signal an die Bremssteuerung (108_{.}1, 108.2) absetzt
und/oder
- die zweite Fahrzeugsteuerung (109.2) in dem Sonderbetriebzustand zumindest bei einer eingehenden Fahranforderung ein Aktivierungssignal zur Aktivierung einer Energieversorgungseinrichtung (105.1, 105.2) zur Versorgung wenigstens eines Teils der Traktionseinrichtungen des Fahrzeugs generiert und/oder
- der Sonderbetriebszustand manuell aktivierbar ist.

13. Verfahren nach einem der Ansprüche 11 oder 12, **dadurch gekennzeichnet, dass**
- die zweite Fahrzeugsteuerung (109.2) in dem Sonderbetriebszustand eine Fahranforderung nach einer ersten Zeitspanne seit Eintreffen der Fahranforderung bei fehlender Erneuerung der Fahranforderung aufhebt und/oder
- die zweite Fahrzeugsteuerung (109.2) in dem Sonderbetriebszustand nach einer zweiten Zeitspanne seit Eintreffen einer Fahranforderung bei fehlender Erneuerung der Fahranforderung die Bremseinrichtungen aktiviert,
wobei
- die zweite Zeitspanne insbesondere länger als die erste Zeitspanne ist.

14. Verfahren nach einem der Ansprüche 11 bis 13, **dadurch gekennzeichnet, dass**
- die zweite Fahrzeugsteuerung (109.2) in dem Sonderbetriebszustand über zumindest ein Betätigungselement (111.1) Steuerungsbefehle für die Traktionssteuerung (104.1 bis 104.4) und/oder die Bremssteuerung (108.1, 108.2) erzeugt
und/oder
- die zweite Fahrzeugsteuerung (109.2) dem Sonderbetriebszustand über ein Türbetätigungselement Steuerungsbefehle für zumindest eine Türsteuerungseinheit erzeugt.

## Claims

1. Control device for a vehicle, in particular a rail vehicle, having
- a traction control system (104.1 to 104.4) for controlling traction devices of the vehicle, a braking control system (108.1, 108.2) for controlling braking devices of the vehicle and a superordinate first vehicle control system (109.1) for controlling the traction control system (104.1 to 104.4) and the braking control system (108.1, 108.2) via a first control path (110), in particular a data bus system, wherein
- the first vehicle control system (109.1) is configured to control the traction control system (104.1 to 104.4) and the braking control system (108.1, 108.2) in a normal operation state of the control device in such a way that, in a recognised emergency situation, a control action activating the braking devices occurs with priority over a control action activating the traction devices,
**characterised in that**
- a second vehicle control system (109.2) is provided to control the traction control system (104.1 to 104.4) and the braking control system (108.1, 108.2) via a second control path (115), wherein
- the second control path (115) is different from the first control path (110),
- the control device is designed to deactivate the first vehicle control system (109.1) and activate the second vehicle control system (109.2) in a special operating state and
- the second vehicle control system (109.2) is designed to control the traction control system (104.1 to 104.4) and the braking control system (108.1, 108.2) in the special operating state in such a way that a control action activating the traction devices occurs with priority over a control action activating the braking devices.

2. Control device according to Claim 1, **characterised in that**
- a drive command signal to the traction control system (104.1 to 104.4) triggers actuation of the traction devices of the vehicle,
- a release command signal to the braking control system (108.1, 108.2) triggers release of the braking devices of the vehicle and
- the second vehicle control system (109.2) is configured in such a way that, in the special operating state, with an incoming drive request it transmits a drive command signal to the traction control system (104.1 to 104.4) and a release command signal to the braking control system (108.1, 108.2).

3. Control device according to Claim 1 or 2, **characterised in that**
- a power supply device (105.1, 105.2) is provided to supply at least a part of the traction devices of the vehicle, wherein the second vehicle control system (109.2) is designed in such a way that, in the special operating state, at least with an incoming drive request it generates an activation signal to activate the power supply devices (105.1, 105.2)
and/or
- the special operating state can be manually activated.

4. Control device according to any one of the preceding claims, **characterised in that**
- the first control path (110) comprises a data bus
and/or
- the second control path (115) comprises a direct signal line (115.1 to 115.8) between the second vehicle control system (109.2) and at least one component of the traction devices or of the braking devices to be controlled in the special operating state,
wherein
- the second control path (115), in particular, in each case comprises a fixedly connected signal line (115.1 to 115.8) between the second vehicle control system (109.2) and all components of the traction devices and of the braking devices to be controlled in the special operating state.

5. Control device according to any one of the preceding claims, **characterised in that**
- a plurality of separate traction devices is provided and the second control path (115) comprises a first signal line (115.1) and a second signal line (115.2), wherein the first signal line (115.1) is connected to a first part (104.1, 104.2) of the traction devices and the second signal line (115.2) is connected to a second part (104.3, 104.4) of the traction devices,
wherein
- the first part (104.1, 104.2) of the traction devices in particular comprises at least 50% of the traction devices of the vehicle
and/or
- the first signal line (115.1) and the second signal line (115.2) are in particular arranged spatially separate from one another and/or separate from one another with respect to signalling
and/or
- the first part (104.1, 104.2) of the traction devices and/or the second part (104.3, 104.4) of the traction devices, in particular, comprises a proportion of the traction devices whose total traction power is sufficient to continue to move the vehicle when the other part of the traction devices fails, wherein the first part (104.1, 104.2) of the traction devices and/or the second part (104.3, 104.4) of the traction devices, in particular, comprises a proportion of the traction devices the total traction power of which is sufficient to continue to move the vehicle when at least a part of the braking devices, in particular all of the braking devices, of the vehicle is locked.

6. Control device according to any one of the preceding claims, **characterised in that**
- a plurality of separate braking devices is provided and the second control path (115) comprises a third signal line (115.3) and a fourth signal line (115.4), wherein the third signal line (115.3) is connected to a first part (108.1) of the braking devices and the fourth signal line (115.4) is connected to a second part (108.2) of the braking devices,
wherein
- the first part (108.1) of the braking devices, in particular, comprises at least 50% of the braking devices of the vehicle
and/or
- the third signal line and the fourth signal line are, in particular, arranged spatially separate from one another and/or separate from one another with respect to signalling.

7. Control device according to any one of the preceding claims, **characterised in that**
- a plurality of separate power supply devices (105.1, 105.2) is provided to supply the traction devices of the vehicle and the second control path (115) comprises a fifth signal line (115.5) and a sixth signal line (115.6), wherein the fifth signal line (115.5) is connected to a first part (105.1) of the power supply devices (105.1, 105.2) and the sixth signal line (115.6) is connected to a second part (105.2) of the power supply devices (105.1, 105.2),
wherein
- the first part (105.1) of the power supply devices, in particular, comprises at least 50% of the power supply devices (105.1, 105.2) of the vehicle
and/or
- the fifth signal line (115.5) and the sixth signal line (115.6) are, in particular, arranged spatially separate from one another and/or separate from one another with respect to signalling.

8. Control device according to any one of the preceding claims, **characterised in that**
- the second vehicle control system (109.2) is designed in such a way that, in the special operating state, a drive request is cancelled after a first period of time has elapsed since the drive request came in, if the drive request is not renewed
and/or
- the second vehicle control system (109.2) is designed in such a way that, in the special operating state, the braking devices are activated after a second period of time has elapsed since a drive request came in, if the drive request is not renewed, wherein
- the second time period is in particular longer than the first time period.

9. Control device according to any one of the preceding claims, **characterised in that**
- the second vehicle control system (109.2) comprises at least one actuation element (111.1) which is configured to generate, in the special operating state, control commands for the traction control system (104.1 to 104.4) and/or the braking control system (108.1, 108.2)
and/or
- the second vehicle control system (109.2) comprises a door actuation element which is configured to generate, in the special operating state, control commands for at least one door control unit of the vehicle.

10. Vehicle, in particular a rail vehicle, having a control device (102) according to any one of the preceding claims.

11. Method for controlling a vehicle, in particular a rail vehicle, in which
- traction devices of the vehicle are controlled by means of a traction control system (104.1 to 104.4), braking devices of the vehicle are controlled by means of a braking control system (108.1, 108.2) and by means of a superordinate first vehicle control system (109.1), the traction control system (104.1 to 104.4) and the braking control system (108.1, 108.2) are controlled via a first control path (110), in particular a data bus system, wherein
- the first vehicle control system (109.1) controls the traction control system (104.1 to 104.4) and the braking control system (108.1, 108.2) in a normal operation state in such a way that, in a recognised emergency situation, a control action activating the braking devices occurs with priority over a control action activating the traction devices,
**characterised in that**
- the first vehicle control system (109.1) is deactivated and a second vehicle control system (109.2) is activated in a special operating state, wherein
- the second vehicle control system (109.2) controls the traction control system (104.1 to 104.4) and the braking control system (108.1, 108.2) via a second control path (115) which is different from the first control path (110) and
- the second vehicle control system (109.2) controls the traction control system (104.1 to 104.4) and the braking control system (108.1, 108.2) in the special operating state in such a way that a control action activating the traction devices occurs with priority over a control action activating the braking devices.

12. Method according to Claim 11, **characterised in that**
- a drive command signal to the traction control system (104.1 to 104.4) triggers actuation of the traction device of the vehicle, the release command signal to the braking control system (108.1, 108,2) triggers release of the braking device of the vehicle and the second vehicle control system (109.2) with an incoming drive request, in the special operating state, transmits a drive control signal to the traction control system (104.1 to 104.4) and a release signal to the braking control system (108.1, 108.2)
and/or
- the second vehicle control system (109.2) in the special operating state at least with one incoming drive request generates an activation signal to activate power supply devices (105.1, 105.2) to supply at least one part of the traction devices of the vehicle
and/or
- the special operating state can be manually activated.

13. Method according to either of Claims 11 and 12, **characterised in that**
- the second vehicle control system (109.2), in the special operating state, cancels a drive request after a first period of time has elapsed since the drive request came in, if the drive request is not renewed
and/or
- the second vehicle control system (109.2), in the special operating state, activates the braking device after a second period of time has elapsed since a drive request came in, if the drive request is not renewed, wherein
- the second time period is, in particular, longer than the first time period.

14. Method according to any one of Claims 11 to 13, **characterised in that**
- the second vehicle control system (109.2), in the special operating state, via at least one actuation element (111.1) generates control commands for the traction control system (104.1 to 104.4) and/or the braking control system (108.1, 108.2)
and/or
- the second vehicle control system (109.2), in the special operating state, via a door actuation element generates control commands for at least one door control unit.

## Revendications

1. Dispositif de commande pour un véhicule, en particulier un véhicule ferroviaire, ayant
- un système de commande de traction (104.1 à 104.4) pour commander des équipements de traction du véhicule, un système de commande de freinage (108.1, 108.2) pour commander des équipements de freinage du véhicule et un premier système de commande de véhicule d'ordre supérieur (109.1) pour commander le système de commande de traction (104.1 à 104.4) et le système de commande de freinage (108.1, 108.2) via un premier canal de commande (110), en particulier un système de bus de données, où
- le premier système de commande de véhicule (109.1) est conçu pour commander le système de commande de traction (104.1 à 104.4) et le système de commande de freinage (108.1, 108.2) lors d'un état d'opération normale du dispositif de commande de telle sorte que, dans une situation d'urgence reconnue, une action de commande activant les équipements de freinage se produit avec priorité par rapport à une action de commande activant les équipements de traction, **caractérisé en ce que**
- un second système de commande de véhicule (109.2) est prévu pour commander le système de commande de traction (104.1 à 104.4) et le système de commande de freinage (108.1, 108.2) via un second canal de commande (115), où
- le second canal de commande (115) est différent du premier canal de commande (110),
- le dispositif de commande est conçu pour désactiver le premier système de commande de véhicule (109.1) et activer le second système de commande de véhicule (109.2) dans un état opérationnel spécial, et
- le second système de commande de véhicule (109.2) est conçu pour commander le système de commande de traction (104.1 à 104.4) et le système de commande de freinage (108.1, 108.2) dans l'état opérationnel spécial de telle sorte qu'une action de commande activant les équipements de traction se produit avec priorité par rapport à une action de commande activant les équipements de freinage.

2. Dispositif de commande selon la Revendication 1, **caractérisé en ce que**
- un signal d'ordre d'entraînement au système de commande de traction (104.1 à 104.4) déclenche l'actionnement des équipements de traction du véhicule,
- un signal d'ordre de déverrouillage au système de commande de freinage (108.1, 108.2) déclenche le déverrouillage des équipements de freinage du véhicule et
- le second système de commande de véhicule (109.2) est conçu de telle sorte qu'avec une requête d'entraînement entrante dans l'état opérationnel spécial, il transmet un signal d'ordre d'entraînement au système de commande de traction (104.1 à 104.4) et un signal d'ordre de déverrouillage au système de commande de freinage (108.1, 108.2).

3. Dispositif de commande selon la Revendication 1 ou 2, **caractérisé en ce que**
- un équipement d'alimentation en énergie (105.1, 105.2) est prévu pour alimenter au moins une partie des équipements de traction du véhicule, où le second système de commande de véhicule (109.2) est conçu de telle sorte que, dans l'état opérationnel spécial, au moins avec une requête d'entraînement entrante, il génère un signal d'activation pour activer l'équipement d'alimentation en énergie (105.1, 105.2)
et/ou
- l'état opérationnel spécial peut être activé manuellement.

4. Dispositif de commande selon une quelconque des revendications précédentes, **caractérisé en ce que**
- le premier canal de commande (110) comprend un bus de données et/ou
- le second canal de commande (115) comprend une ligne directe de signaux (115.1 à 115.8) entre le second système de commande de véhicule (109.2) et au moins un composant des équipements de traction ou des équipements de freinage à commander dans l'état opérationnel spécial,
où
- le second canal de commande (115), en particulier, comprend dans chaque cas une ligne directe de signaux connectée de manière fixe (115.1 à 115.8) entre le second système de commande de véhicule (109.2) et tous les composants des équipements de traction et des équipements de freinage à commander dans l'état opérationnel spécial.

5. Dispositif de commande selon une quelconque des revendications précédentes, **caractérisé en ce que**
- une pluralité d'équipements de traction séparés est prévue et le second canal de commande (115) comprend une première ligne de signaux (115.1) et une seconde ligne de signaux (115.2), où la première ligne de signaux (115.1) est connectée à une première partie (104.1, 104.2) des équipements de traction et la seconde ligne de signaux (115.2) est connectée à une seconde partie (104.3, 104.4) des équipements de traction,
où
- la première partie (104.1, 104.2) des équipements de traction en particulier comprend au moins 50 % des équipements de traction du véhicule
et/ou
- la première ligne de signaux (115.1) et la seconde ligne de signaux (115.2) sont, en particulier, disposées séparément l'une de l'autre dans l'espace et/ou séparément l'une de l'autre en ce qui concerne la signalisation
et/ou
- la première partie (104.1, 104.2) des équipements de traction et/ou la seconde partie (104.3, 104.4) des équipements de traction, en particulier, comprend une partie des équipements de traction dont la puissance de traction totale est suffisante pour continuer à déplacer le véhicule lorsque l'autre partie des équipements de traction tombe en panne, où la première partie (104.1, 104.2) des équipements de traction et/ou la seconde partie (104.3, 104.4) des équipements de traction, en particulier, comprend une partie des équipements de traction dont la puissance de traction totale est suffisante pour continuer à déplacer le véhicule lorsqu'au moins une partie des équipements de freinage, en particulier tout les équipements de freinage, du véhicule est verrouillé.

6. Dispositif de commande selon une quelconque des revendications précédentes, **caractérisé en ce que**
- une pluralité d'équipements de freinage séparés est prévue et le second canal de commande (115) comprend une troisième ligne de signaux (115.3) et une quatrième ligne de signaux (115.4), où la troisième ligne de signaux (115.3) est connectée à une première partie (108.1) des équipements de freinage et la quatrième ligne de signaux (115.4) est connectée à une seconde partie (108.2) des équipements de freinage,
où
- la première partie (108.1) des équipements de freinage en particulier comprend au moins 50 % des équipements de freinage du véhicule
et/ou
- la troisième ligne de signaux et la quatrième ligne de signaux sont, en particulier, disposées séparément l'une de l'autre dans l'espace et/ou séparément l'une de l'autre en ce qui concerne la signalisation.

7. Dispositif de commande selon une quelconque des revendications précédentes, **caractérisé en ce que**
- une pluralité d'équipements d'alimentation en énergie (105.1, 105.2) séparés est prévue pour alimenter les équipements de traction du véhicule et le second canal de commande (115) comprend une cinquième ligne de signaux (115.5) et une sixième ligne de signaux (115.6), où la sixième ligne de signaux (115.5) est connectée à une première partie (105.1) des équipements d'alimentation en énergie (105.1, 105.2) et la sixième ligne de signaux (115.6) est connectée à une seconde partie (105.2) des équipements d'alimentation en énergie (105.1, 105.2),
où
- la première partie (105.1) des équipements d'alimentation en énergie en particulier comprend au moins 50 % des équipements d'alimentation en énergie (105.1, 105.2) du véhicule
et/ou
- la cinquième ligne de signaux (115.5) et la sixième ligne de signaux (115.6) sont, en particulier, disposées séparément l'un de l'autre dans l'espace et/ou séparément l'un de l'autre en ce qui concerne la signalisation.

8. Dispositif de commande selon une quelconque des revendications précédentes, **caractérisé en ce que**
- le second système de commande de véhicule (109.2) est conçu de telle sorte que, dans l'état opérationnel spécial, une première requête d'entraînement est annulée après qu'une première période se soit écoulée depuis que la requête d'entraînement est arrivée, si la requête d'entraînement n'est pas renouvelée
et/ou
- le second système de commande de véhicule (109.2) est conçu de telle sorte que, dans l'état opérationnel spécial, les équipements de freinage sont activés après qu'une seconde période se soit écoulée depuis qu'une requête d'entraînement est arrivée, si la requête d'entraînement n'est pas renouvelée, où
- la seconde période est, en particulier, plus longue que la première période.

9. Dispositif de commande selon une quelconque des revendications précédentes, **caractérisé en ce que**
- le second système de commande de véhicule (109.2) comprend au moins un élément d'actionnement (111.1) qui est conçu pour générer, dans l'état opérationnel spécial, des ordres de contrôle pour le système de commande de traction (104.1 à 104.4) et/ou le système de commande de freinage (108.1, 108.2)
et/ou
- le second système de commande de véhicule (109.2) comprend un élément d'actionnement de porte qui est conçu pour générer, dans l'état opérationnel spécial, des ordres de contrôle pour au moins une unité de commande de porte du véhicule.

10. Véhicule, en particulier un véhicule ferroviaire, ayant un dispositif de commande (102) selon une quelconque des revendications précédentes.

11. Procédé pour commander un véhicule, en particulier un véhicule ferroviaire, dans lequel
- des équipements de traction du véhicule sont commandés au moyen d'un système de commande de traction (104.1 à 104.4), des équipements de freinage du véhicule sont commandés au moyen d'un système de commande de freinage (108.1, 108.2) et, au moyen d'un premier système de commande de véhicule d'ordre supérieur (109.1), le système de commande de traction (104.1 à 104.4) et le système de commande de freinage (108.1, 108.2) sont commandés via un premier canal de commande (110), en particulier un système de bus de données, où
- le premier système de commande de véhicule (109.1) commande le système de commande de traction (104.1 à 104.4) et le système de commande de freinage (108.1, 108.2) lors d'un état de fonctionnement normal de telle sorte que, dans une situation d'urgence reconnue, une action de commande activant les équipements de freinage se produit avec priorité par rapport à une action de commande activant les équipements de traction,
**caractérisé en ce que**
- le premier système de commande de véhicule (109.1) est désactivé et un second système de commande de véhicule (109.2) est activé dans un état opérationnel spécial, où
- le second système de commande de véhicule (109.2) commande le système de commande de traction (104.1 à 104.4) et le système de commande de freinage (108.1, 108.2) via un second canal de commande (115) qui est différent du premier canal de commande (110) et
- le second système de commande de véhicule (109.2) commande le système de commande de traction (104.1 à 104.4) et le système de commande de freinage (108.1, 108.2) dans l'état opérationnel spécial de telle sorte qu'une action de commande activant les équipements de traction se produit avec priorité par rapport à une action de commande activant les équipements de freinage.

12. Procédé selon la Revendication 11, **caractérisé en ce que**
- un signal d'ordre d'entraînement au système de commande de traction (104.1 à 104.4) déclenche l'actionnement des équipements de traction du véhicule, un signal d'ordre de déverrouillage au système de commande de freinage (108.1, 108.2) déclenche le déverrouillage des équipements de freinage du véhicule et le second système de commande de véhicule (109.2) avec une requête d'entraînement entrante, dans l'état opérationnel spécial, transmet un signal d'ordre d'entraînement au système de commande de traction (104.1 à 104.4) et un signal d'ordre de déverrouillage au système de commande de freinage (108.1, 108.2)
et/ou
- le second système de commande de véhicule (109.2) dans l'état opérationnel spécial au moins avec une requête d'entraînement entrante génère un signal d'activation pour activer un équipement d'alimentation en énergie (105.1, 105.2) afin d'alimenter au moins une partie des équipements de traction du véhicule et/ou
- l'état opérationnel spécial peut être activé manuellement.

13. Procédé selon l'une ou l'autre des Revendications 11 et 12, **caractérisé en ce que**
- le second système de commande de véhicule (109.2), dans l'état opérationnel spécial, annule une requête d'entraînement après qu'une première période se soit écoulée depuis que la requête d'entraînement est arrivée, si la requête d'entraînement n'est pas renouvelée
et/ou
- le second système de commande de véhicule (109.2), dans l'état opérationnel spécial, active les équipements de freinage après qu'une seconde période se soit écoulée depuis qu'une requête d'entraînement est arrivée, si la requête d'entraînement n'est pas renouvelée,
où
- la seconde période est, en particulier, plus longue que la première période.

14. Procédé selon une quelconque des Revendications 11 à 13, **caractérisé en ce que**
- le second système de commande de véhicule (109.2), dans l'état opérationnel spécial, via au moins un élément d'actionnement (111.1), génère des ordres de contrôle pour le système de commande de traction (104.1 à 104.4) et/ou le système de commande de freinage (108.1, 108.2)
et/ou
- le second système de commande de véhicule (109.2), dans l'état opérationnel spécial, via un élément d'actionnement de porte, génère des ordres de contrôle pour au moins une unité de commande de porte.
